# EUROPEAN PATENT SPECIFICATION

(11) **EP 3 016 417 B1**
(45) Date of publication and mention of the grant of the patent: **27.02.2019**
(21) Application number: 13887783.2
(22) Date of filing: 26.06.2013
(51) Int. Cl.: H04W 4/06, H04W 76/45, H04M 3/00, H04W 68/00, H04W 72/00

(54) **USER INFORMATION NOTIFICATION METHOD AND MOBILE SERVICE SWITCHING CENTER**
BENACHRICHTIGUNGSVERFAHREN FÜR BENUTZERINFORMATIONEN UND MOBILDIENSTVERMITTLUNGSZENTRALE
PROCÉDÉ DE NOTIFICATION D'INFORMATIONS D'UTILISATEUR ET CENTRE DE COMMUTATION DE SERVICE MOBILE

(43) Date of publication of application: 04.05.2016
(73) Proprietor: Huawei Technologies Co., Ltd., Longgang District Shenzhen, Guangdong 518129 (CN)
(72) Inventor: LU, Tiangang, Shenzhen Guangdong 518129 (CN); XIE, Qiting, Shenzhen Guangdong 518129 (CN); GUO, Guoping, Shenzhen Guangdong 518129 (CN)
(74) Representative: Maiwald Patent- und Rechtsanwaltsgesellschaft mbH
(86) International application number: PCT/CN2013/078014
(87) International publication number: WO 2014/205682

(56) References cited:
- CN-A- 101 064 553
- CN-A- 101 064 553
- CN-A- 101 198 079
- CN-A- 101 860 421
- CN-A- 101 860 421
- "3rd Generation Partnership Project; Technical Specification Group Core Network and Terminals; Voice Group Call Service (VGCS); Stage 2 (Release 11)", 3GPP STANDARD; 3GPP TS 43.068, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V11.4.0, 19 December 2012 (2012-12-19), pages 1-196, XP050691337, [retrieved on 2012-12-19]

## Description

### TECHNICAL FIELD

The present invention relates to the field of communications technologies, and in particular, to a user information notification method and a mobile service switching center.

### BACKGROUND

In the 3rd Generation Partnership Project (The 3rd Generation Partnership Project, 3GPP for short) 3GPP TS 42.068, 3GPP TS 43.068, and 3GPP TS 44.068 protocols, a group call VGCS (voice group call service, VGCS for short) is defined. The VGCS allows setup of a voice group call to a group of service terminals that belong to a specified service area (group call area), and a half-duplex mode is used for the call. During the call, a user of any of the service terminals may become a talker (that is, one who speaks); however, at any moment, only a user of one of the service terminals is allowed to speak, and users of the other service terminals are listeners.

When a group call is set up for a service terminal, a dedicated connection to a scheduling terminal can also be established at the same time. If a full-duplex mode is used for the connection, a dispatcher of the scheduling terminal may receive voice information of the group call at any time, and may also release voice information to the entire group at any time.

If the group call area covers multiple mobile service switching centers (Mobile Service Switching Center, MSC for short), one of the MSCs needs to be designated as an anchor MSC (ANCHOR MSC, hereinafter referred to as MSC-A), the other MSCs are called relay MSCs (RELAY MSC, hereinafter referred to as MSC-R).

Generally, call setup and release, and access of a scheduling terminal are processed by the MSC-A, and the MSC-R is only responsible for establishing a group call channel for a cell under control of the local MSC, and transmitting, to the MSC-A, group call signaling of a service terminal in the cell under control of the local MSC.

A group call may be initiated by the service terminal, or may be initiated by a scheduling terminal that subscribes to group call initiation permission in a group call register (Group Call Register, GCR for short).

In 3GPP TS 43.068 iii the prior art, when a service terminal seizes an uplink for speaking in a group call (for example, a base station subsystem (Base Station Subsystem, BSS for short) reports an UPLINK_REQ_CONF (L3msg) message to an MSC, until the service terminal releases the uplink and stops speaking (for example, the BSS reports an UPLINK RELEASE IND message to the MSC)); or, after the service terminal seizes an uplink under control of an MSC-R and sends uplink seized user information to an MSC-A (for example, the MSC-R sends a PROCESS GROUP CALL_SIGN.(add_info) message to the MSC-A, until the service terminal releases the uplink and stops speaking (for example, the MSC-R sends a PROCESS_GROUP CALL_SIGN,(uplink release indication) message to the MSC-A)). In the scheduling terminal, there is only voice of a talker, that is, the service terminal that seizes an uplink resource, and a dispatcher cannot learn which current service terminal is the current talker.

CN 101 860 421 A describes a method and a system for realizing uplink takeover of a group calling channel. The method comprises: in the group calling uplink channel takeover process, after determining that a mobile station, MS, takes over the uplink channel, the mobile station, MS, returns self-function information back to a base station subsystem, BSS; each BSS administered by a mobile switching centre, MSC, to which the MS belongs respectively forwards received MS function information to an anchor MSC; and the anchor MSC sends the function information of a chosen new speaker to all mobile service users and dispatchers in group calling.

### SUMMARY

The present invention is carried out according to the appended independent claims. Optional features of the invention are carried out according to the dependent claims. The invention provides a user information notification method and a mobile service switching center, which are used to enable a dispatcher corresponding to a scheduling terminal to learn information about a talker in a service terminal in a group call.

According to a first aspect, an embodiment of the present invention provides a user information notification method, including:
if a service terminal seizes an uplink resource under control of a mobile service switching center MSC in a group call, sending, by the MSC after acquiring user information of the service terminal, a first message to a scheduling terminal, where the first message carries the user information of the service terminal that seizes the uplink resource.

With reference to the first aspect, the if a service terminal seizes an uplink resource under control of an MSC in a group call, acquiring, by the MSC, user information of the service terminal includes:
if a service terminal seizes an uplink resource under control of an anchor mobile service switching center MSC-A in a group call, obtaining, by the MSC-A after receiving an uplink resource seized confirm message reported by a base station subsystem BSS, user information of the service terminal according to the uplink resource seized confirm message;
or,
if a service terminal seizes an uplink resource under control of a relay mobile service switching center MSC-R in a group call, obtaining, by an MSC-A after receiving a group call signaling request message sent by the MSC-R, user information of the service terminal according to the group call signaling request message.

With reference to the first aspect, the uplink resource seized confirm message includes:
the user information of the service terminal that seizes the uplink resource; and
the group call signaling request message includes: the user information of the service terminal that seizes the uplink resource.

With reference to the first aspect, in a first optional implementation manner, the method further includes:
if the service terminal releases the uplink resource, sending, by the MSC after receiving an uplink resource release indication message, a second message to the scheduling terminal, where the second message carries the user information of the service terminal that releases the seized uplink resource;
or,
sending, by the MSC when releasing the uplink resource, a second message to the scheduling terminal, where the second message carries the user information of the service terminal for which the seized uplink resource is released.

With reference to the first aspect and the first optional implementation manner, in a second optional implementation manner, if a service terminal seizes an uplink resource under control of an MSC-A in a group call, the uplink resource release indication message is sent by a BSS to the MSC-A; or
if a service terminal seizes an uplink resource under control of an MSC-R in a group call,
the uplink resource release indication message is sent by the MSC-R to an MSC-A.

With reference to the first aspect and the first optional implementation manner, in a third optional implementation manner, the first message is a user information indication message, and the second message is a user information indication message.

With reference to the first aspect and the foregoing possible implementation manners, in a fourth optional implementation manner, the user information includes one or more of the following information:
a terminal identifier, a user priority, user location information, and a function number.

According to a second aspect, an embodiment of the present invention provides a mobile service switching center, including:
a processor, configured to: when a service terminal seizes an uplink resource under control of a mobile service switching center MSC in a group call, acquiring user information of the service terminal; and
a transmitter, configured to: after the processor acquires the user information of the service terminal, send a first message to a scheduling terminal, where the first message carries the user information of the service terminal that seizes the uplink resource.

With reference to the second aspect, the processor is specifically configured to:
when a service terminal seizes an uplink resource under control of an anchor mobile service switching center MSC-A in a group call, receive an uplink resource seized confirm message reported by a base station subsystem BSS, and obtain user information of the service terminal according to the uplink resource seized confirm message;
or,
when a service terminal seizes an uplink resource under control of a relay mobile service switching center MSC-R in a group call, receive a group call signaling request message sent by the MSC-R, and obtain user information of the service terminal according to the group call signaling request message.

With reference to the second aspect the uplink resource seized confirm message includes:
the user information of the service terminal that seizes the uplink resource; and
the group call signaling request message includes: the user information of the service terminal that seizes the uplink resource.

With reference to the second aspect and the foregoing possible implementation manners, in a first optional implementation manner, the processor is further configured to:
when the service terminal releases the uplink resource, receive an uplink resource release indication message; and
the transmitter is further configured to:
   after the processor receives the uplink resource release indication message, send a second message to the scheduling terminal, where the second message carries the user information of the service terminal that releases the seized uplink resource;
   or,
   the transmitter is further configured to: when the processor releases the uplink resource, send a second message to the scheduling terminal, where the second message carries the user information of the service terminal for which the seized uplink resource is released.

With reference to the second aspect and the first optional implementation manner, in a second optional implementation manner, the processor is specifically configured to:
when a service terminal seizes an uplink resource under control of an MSC-A in a group call, receive an uplink resource release indication message sent by a BSS;
or,
when a service terminal seizes an uplink resource under control of an MSC-R in a group call, receive an uplink resource release message sent by the MSC-R.

With reference to the second aspect and the foregoing possible implementation manners, in a third optional implementation manner, the user information includes one or more of the following information:
a terminal identifier, a user priority, user location information, and a function number.

It can be learned from the foregoing technical solutions that, according to the user information notification method and the mobile service switching center in the embodiments of the present invention, user information of a service terminal is acquired by using an MSC, the acquired user information of the service terminal is sent to a scheduling terminal, so that a dispatcher corresponding to the scheduling terminal can learn information about the user information of the service terminal that seizes an uplink resource in a group call.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic flowchart of a method for setup and release of a talker in a group call in the prior art;
FIG. 2 is a schematic flowchart of a method for setup and release of a talker in a group call in the prior art;
FIG. 3A is a schematic flowchart of a user information notification method according to an embodiment of the present invention;
FIG. 3B is a schematic flowchart of a user information notification method according to another embodiment of the present invention;
FIG. 4A is a schematic flowchart of a user information notification method according to another embodiment of the present invention;
FIG. 4B is a schematic flowchart of a user information notification method according to another embodiment of the present invention;
FIG. 5 is a schematic structural diagram of a mobile service switching center according to an embodiment of the present invention; and
FIG. 6 is a schematic structural diagram of a mobile service switching center according to another embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

To facilitate understanding of the technical solutions in the embodiments of the present invention, content related to the present invention is briefly described first.

In some descriptions of the embodiments of the present invention, a dispatcher may refer to a scheduling terminal corresponding to a dispatcher, and a service user may refer to a service terminal corresponding to a service user.

Scheduling terminal (Dispatcher): A maximum of five scheduling terminals can subscribe to a GCR in each group call. A scheduling terminal may be a fixed-line user terminal or a mobile user terminal, which participates in voice communication of a group call by using a dedicated channel established for the scheduling terminal by a network.

Service terminal (Service Subscriber): A service terminal is a mobile user terminal that subscribes to a group call service in a home location register (Home Location Register, HLR for short), where each service terminal may subscribe to a maximum of 50 group calls at the same time. A service terminal participates in voice communication of a group call by using a group call channel allocated for each cell in a group call area. The service terminal may initiate/end a group call under control of an MSC-A or an MSC-R.

Anchor MSC (MSC-A) in a group call: An anchor MSC is responsible for managing and maintaining an MSC of a specified group call. When a group call area of a group call exceeds an MSC, an anchor MSC of the group call is predefined in a network.

Relay MSC (MSC-R) in a group call: When a group call area exceeds an area of an MSC, an MSC that manages cells except those belong to an anchor MSC of the group call is called a relay MSC of the group call.

It should be noted that, in the embodiments of the present invention, service terminals and scheduling terminals may be mobile phones (or called "cellular" phones) and computers having mobile terminals. For example, terminals may also be portable, pocket-sized, handheld, computer built-in, or vehicle-mounted mobile apparatuses.

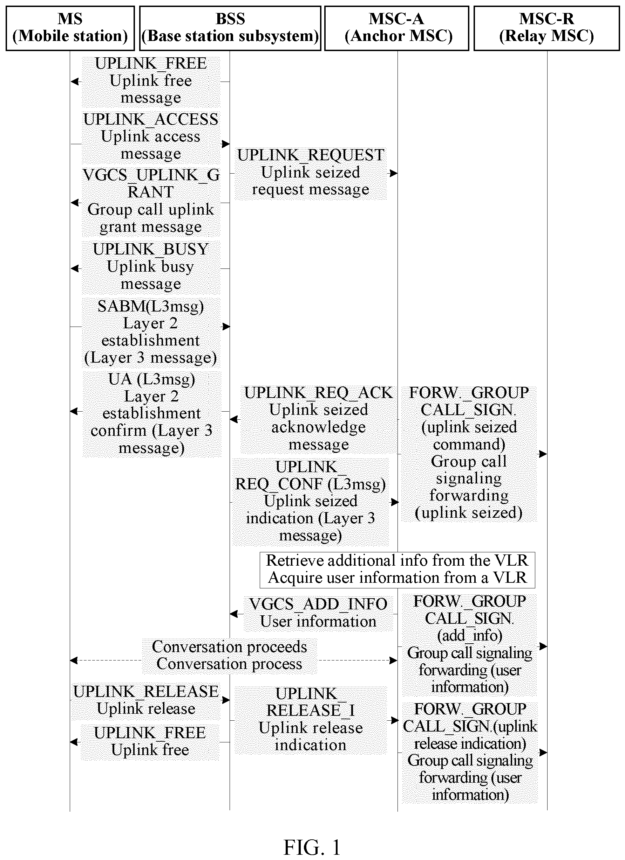

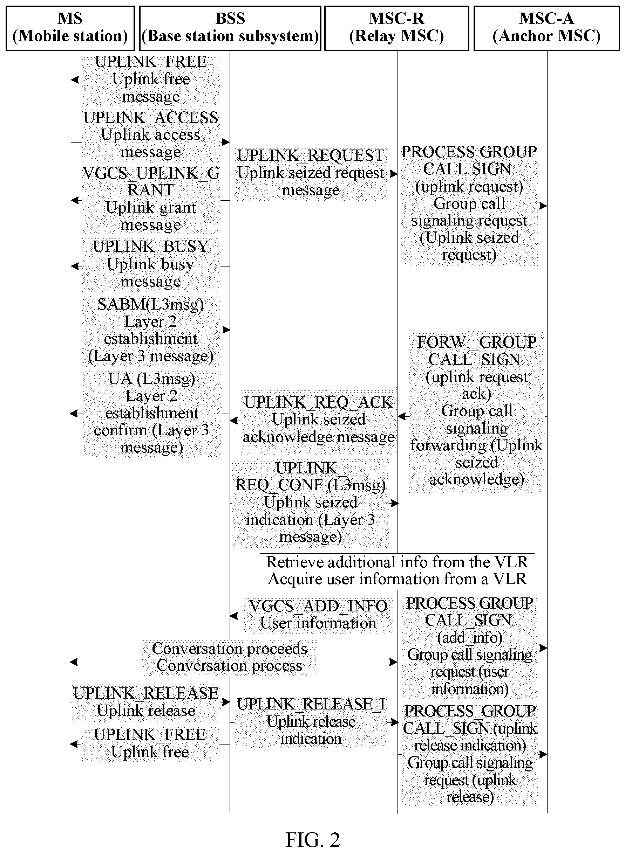

With reference to FIG. 1 and FIG. 2, in the prior art, FIG. 1 shows a schematic diagram of a procedure in which a service terminal seizes an uplink for speaking in a group call until the service terminal releases the uplink and stops speaking.

FIG. 2 shows a schematic diagram of a procedure in which a service terminal seizes an uplink resource under control of an MSC-R and sends uplink seized user information to an MSC-A (for example, the MSC-R sends a PROCESS GROUP CALL_SIGN.(add_info) message to the MSC-A) until the service terminal releases the uplink resource and stops speaking (the MSC-R sends a PROCESS_GROUP CALL_SIGN.(uplink release indication) message to the MSC-A).

Interactive messages in FIG. 1 and FIG. 2 are briefly introduced as follows:
Uplink free (UPLINK FREE) message: A BSS repeatedly sends, on a primary signaling connection (FACCH), this connectionless RR message to a mobile station (Mobile Station, MS for short), to notify all member terminals in a group that an uplink is idle.

Uplink access message (UPLINK ACCESS): The MS sends this message to the BSS on an uplink of a group call channel by using a random access process, where this message can be repeatedly sent. The UPLINK_ACCESS message is similar to a channel request. The UPLINK_ACCESS is sent on the uplink of the group call channel, and a purpose of sending the UPLINK ACCESS message is the same as a reason for subsequently establishing an uplink request by a talker.

Uplink seized request message (UPLINK REQUEST): The BSS indicates this uplink request to an MSC-A. When receiving multiple UPLINK_ACCESS, the BSS forwards only one UPLINK REQUEST to the MSC-A.

Group call uplink grant message (VGCSUPLINK GRANT): This message is used to respond to an uplink request on a downlink of a group call channel, and includes information used by the MS for synchronization with a network, and uplink access contention resolution information, that is, a request parameter (related to UPLINK ACCESS) and physical information (used to send information on the uplink of the group call channel). After receiving the VGCS_UPLINK_GRANT, the related MS may start to directly send voice. In this case, the BSS immediately stops sending the UPLINK FREE message.

Uplink busy message (UPLINK BUSY): This connectionless RR message is sent on the primary signaling connection (FACCH), to notify all member MSs of the group that the uplink is busy. If the network supports a talker priority, the UPLINK_BUSY indicates a talker priority of a current service terminal to all listening service terminals. If an emergency mode is set in the network, the UPLINK BUSY also indicates the emergency mode. The UPLINK BUSY message is repeatedly sent on the FACCH at an interval of T1 seconds. The UPLINK BUSY message and a Layer 2 establishment message (SABM message) in the following are independent of each other in sequence.

Layer 2 establishment message (SABM(L3msg)): This message is used by the MS to establish a Layer 2 connection to the BSS, and includes Layer 3 information such as a classmark and a terminal identifier such as an identifier of the MS.

Layer 2 establishment acknowledge message (UA(L3msg)): This message is used by the BSS to acknowledge the Layer 2 connection to the MS, and includes Layer 3 information that is the same as the SABM and reflected for contention resolution.

Uplink seized acknowledge message (UPLINK_REQUEST_ACKNOWLEDGE): The MSC-A acknowledges the uplink seized request message to one BSS. If multiple BSSs or MSC-Rs request uplink seized request messages, the MSC-A accepts only one of the messages and rejects all the other messages by using an UPLINK_REJECT_CMD message. After receiving the UPLINK_REJECT_CMD message, the BSS sends an UPLINK_REL message to a corresponding terminal/MS, and then broadcasts an uplink busy message (UPLINK_BUSY message), to indicate that the uplink is busy. The MSC-A needs to send an UPLINK_SEIZED_CMD message to all BSSs that do not apply for an uplink seized request. After receiving the UPLINK_SEIZED_CMD message, a BSC needs to broadcast an uplink busy (UPLINK BUSY) message, to indicate that the uplink is busy.

Group call signaling forwarding message (FORWARD_GROUP CALL_SIGNALLING (uplink seized command)): The MSC-A sends this message to all the MSC-Rs, to notify that the uplink is busy.

Uplink seized confirm message (UPLINK_REQUEST_CONFIRM): This message is used by the BSS to confirm use of the uplink to the MSC-A, where the message carries a terminal identifier.

In a RANFlex configuration, a visited mobile switching center (visited mobile switching center, VMSC for short) of a user requesting an uplink may be different from a group call serving MSC in a location area in which the VMSC is located. In this case, the VMSC shall acquire information, such as user information, from a VLR of the serving MSC by using a MAP message SEND_GROUP_CALL_INFO.

User information deliver message (VGCSADD INFO): The MSC-A sends additional information of a new talking service terminal to all the BSSs, and then the BSSs broadcast an ADD_INFO message that includes the additional information to all the listeners.

Group call signaling forwarding message (FORWARD_GROUP CALL_SIGNALLING (additional info)): The MSC-A sends this message to all the MSC-Rs, to provide the additional information of the new talking service terminal.

Conversation process (Conversation proceeds): Once the terminal/MS controls the uplink, direct communication can be performed. Bidirectionality of a conference bridge can ensure that all downlink channels have been connected.

Uplink release message (UPLINK_RELEASE): When a service terminal that owns an uplink resource intends to release the uplink resource, the service terminal that owns the uplink resource sends, on the FACCH, this message to the BSS, to indicate release of the uplink.

Uplink release indication message (UPLINK RELEASE INDICATION): The BSS notifies the MSC-A of the uplink release.

Group call signaling forwarding message (FORWARD_GROUP CALL_SIGNALLING (uplink release indication)): The MSC-A notifies all the MSC-Rs that the uplink is idle, and then the MSC-Rs sends an UPLINK RELEASE message to each related BSS, to indicate that the uplink is idle.

In addition, in FIG. 2, messages that are the same as those in FIG. 1 are not described in detail again, and only messages that are different from those in FIG. 1 are described.

Uplink seized request message (UPLINK REQUEST): A BSS indicates an uplink request to an MSC-R. When receiving multiple uplink access (UPLINK ACCESS) request, a BSC forwards only one UPLINK REQUEST to the MSC-R.

When the BSS supports a talker priority and receives a talker priority higher than "normal subscriber" from a terminal, the BSS needs to delay sending of an UPLINK REQUEST message to an MSC, until the BSS receives, from the terminal, an SABM(L3msg) that includes an identifier of the terminal. Then the BSS adds, in the UPLINK REQUEST message, a Layer 3 message, a talker priority, and an identifier of a cell (a cell that receives an UPLINK_ACCESS message). In this case, the BSS does not send an UPLINK REQUEST CONFIRM message.

Group call signaling request message (PROCESS_GROUP CALL_SIGNALLING (uplink request)): The MSC-R sends this message to an MSC-A, to indicate that a service terminal that roams within coverage of the MSC-R requests an uplink resource.

If the UPLINK REQUEST message includes a Layer 3 message, the PROCESS_GROUP CALL_SIGNALLING message, if available, further needs to include additional information of a new talking service terminal.

Group call signaling forwarding message (FORWARD_GROUP CALL_SIGNALLING (uplink request ack)): The MSC-A sends this message to the MSC-R, to indicate that an uplink request of a service terminal that roams within the coverage of the MSC-R is allowed.

Uplink seized acknowledge message (UPLINK_REQUEST_ACKNOWLEDGE): The MSC-R acknowledges an uplink to one BSS. If multiple BSSs request the uplink, only one uplink request is accepted, and all the other uplink requests are rejected by using an UPLINK_REJECT_CMD message. After receiving the UPLINK_REJECT_CMD message, the BSS sends an UPLINK REL message to a corresponding terminal, and then broadcasts an UPLINK_BUSY message, to indicate that the uplink is busy. The MSC-R needs to send an UPLINK_SEIZED_CMD message to all BSSs that do not apply for the uplink. After receiving the UPLINK_SEIZED_CMD message, the BSS needs to broadcast an UPLINK_BUSY message, to indicate that the uplink is busy.

Uplink seized confirm message (UPLINK_REQUEST_CONFIRM): This message is used by the BSS to confirm use of the uplink to the MSC-R, where the message carries the identifier of the terminal.

In a RANFlex configuration, a VMSC of a user requesting an uplink may be different from a group call serving MSC in a location area in which the VMSC is located. In this case, the VMSC shall acquire information from a VLR of the serving MSC by using a MAP message SEND_GROUP_CALL_INFO.

VGCS_ADD_INFO: The MSC-R sends additional information of a new talking service terminal to all the BSSs, and then the BSSs broadcast an ADD_INFO message that includes the additional information to all the listeners.

Group call signaling request message (PROCESS_GROUP CALL_SIGNALLING (additional info)): The MSC-R sends this message to the MSC-A, to provide the additional information of the new talking service terminal. The MSC-A needs to forward this message to all the other MSC-Rs.

If the additional information is already included in the PROCESS_GROUP CALL_SIGNALLING (uplink request) message, this message is not sent.

Conversation process (Conversation proceeds): Once the terminal controls the uplink, direct communication can be performed. Bidirectionality of a conference bridge can ensure that all downlink channels have been connected.

Uplink release message (UPLINK_RELEASE): When a service terminal that owns an uplink resource intends to release the uplink resource, the service terminal that owns the uplink resource sends, on an FACCH, this message to the BSS, to indicate release of the uplink.

Uplink release indication message (UPLINK RELEASE INDICATION): The BSS notifies the MSC-R of the uplink release.

Group call signaling request message (PROCESS_GROUP CALL_SIGNALLING (uplink release indication)): The MSC-R indicates to the MSC-A that the uplink is idle.

Between seizing the uplink and releasing the uplink by the service terminal in the group call in FIG. 1 and FIG. 2, user information of the talker is not sent to a scheduling terminal; therefore, the scheduling terminal cannot directly acquire the user information of the talker by means of information interaction.

An embodiment of the present invention provides a user information notification method, where the method includes:
if a service terminal seizes an uplink resource under control of a mobile service switching center MSC in a group call, sending, by the MSC after acquiring user information of the service terminal, a first message to a scheduling terminal, where the first message carries the user information of the service terminal that seizes the uplink resource.

According to the user information notification method in this embodiment, after user information of a service terminal is acquired by using an MSC, the acquired user information of the service terminal is sent to a scheduling terminal, so that the scheduling terminal can learn about the user information of the service terminal that seizes an uplink resource in a group call.

For example, the user information includes one or more of the following information:
a terminal identifier, a user priority, user location information, a function number, and the like.

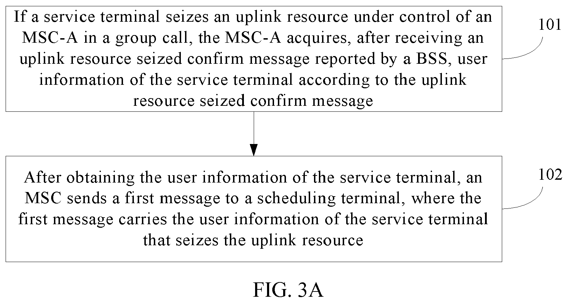

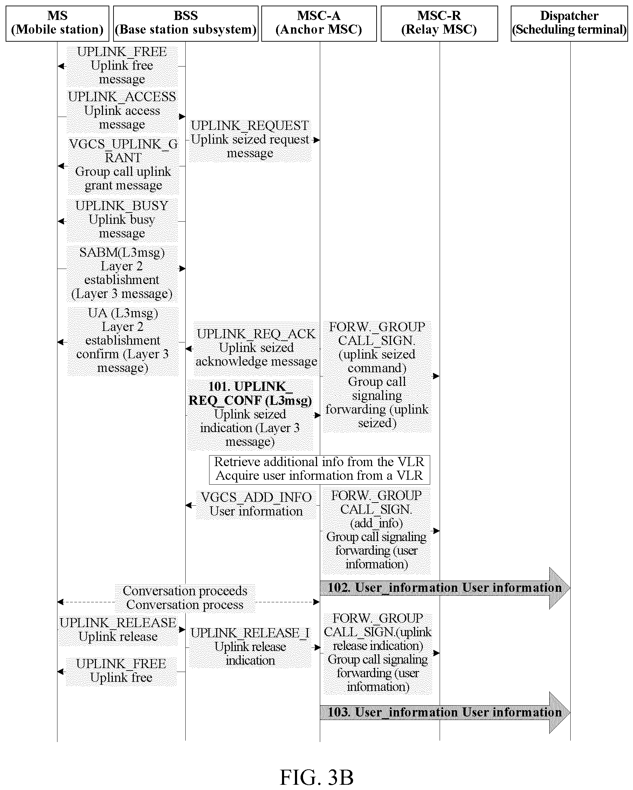

With reference to FIG. 3A and FIG. 3B, FIG. 3A and FIG. 3B show a schematic flowchart of a user information notification method according to an embodiment of the present invention. The user information notification method in this embodiment is described as follows:
101. If a service terminal seizes an uplink resource under control of an MSC-A in a group call, the MSC-A acquires, after receiving an uplink resource seized confirm message reported by a BSS, user information of the service terminal according to the uplink resource seized confirm message. Currently, the uplink resource seized confirm message includes the user information of the service terminal that seizes the uplink resource; therefore, after receiving the uplink resource seized confirm message reported by the BSS, the MSC-A can obtain the user information of the service terminal.
102. After obtaining the user information of the service terminal, an MSC sends a first message to a scheduling terminal, where the first message carries the user information of the service terminal that seizes the uplink resource.

For example, the first message may be a user information indication message, such as a USER INFORMATION message in a user-to-user signaling 3 (User to User Signaling 3, UUS3 for short) service.

Optionally, on the basis of FIG. 3A, the foregoing user information notification method may further include the following step 103, as shown in FIG. 3B.

103. If the service terminal releases the uplink resource, the MSC sends, after receiving an uplink resource release indication message, a second message to the scheduling terminal, where the second message carries the user information of the service terminal that releases the seized uplink resource. For example, the second message may be a user information indication message, for example, a USER INFORMATION message in a UUS3 service.

In FIG. 3B, the foregoing uplink resource release indication message may be sent by the BSS to the MSC-A. In other words, the service terminal seizes the uplink resource under control of the MSC-A in the group call, and the uplink resource release indication message is sent by the BSS to the MSC-A.

In the flowchart of the group call shown in FIG. 3B, a service terminal (such as an MS) seizes an uplink resource under control of the MSC-A for speaking, the BSS reports an UPLINK_REQ_CONF message to the MSC, the MSC-A acquires user information of the service terminal, and then the MSC-A sends a USER INFORMATION message to a scheduling terminal, to notify the scheduling terminal of the user information of the service terminal.

Optionally, when the service terminal releases the uplink resource, after the BSS reports an UPLINK_RELEASE_I message to the MSC-A or when the MSC-A releases the uplink resource, the MSC-A sends a USER INFORMATION message to the scheduling terminal, to notify the scheduling terminal of the user information of the service terminal. It can be understood that, at this time, the MSC-A notifies the scheduling terminal of the user information of the service terminal that releases the uplink resource, so that the scheduling terminal learns that currently no service terminal seizes the uplink resource.

In this embodiment, the first message and the second message may be the same, and are used to indicate seizing and releasing an uplink resource by a same service terminal. In another embodiment, the first message and the second message may be different, which can be set according to actual requirements, and this embodiment is merely an example for description.

By using the foregoing user information notification method, the scheduling terminal in the group call can learn about the user information of the service terminal that seizes the uplink resource.

In addition, it should be noted that, in practical applications, if the service terminal proactively releases the uplink resource seized by the service terminal after the service terminal seizes the uplink resource for a preset period of time, the MSC-A may send a second message to the scheduling terminal, where the second message carries the user information of the service terminal that releases the seized uplink resource.

In other words, no matter whether the MSC-A receives the uplink resource release indication message sent by the BSS, when the service terminal releases the uplink resource after the service terminal seizes the uplink resource for a period of time, the MSC-A may send the second message to the scheduling terminal.

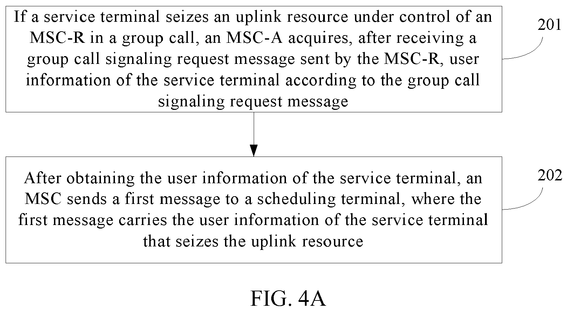

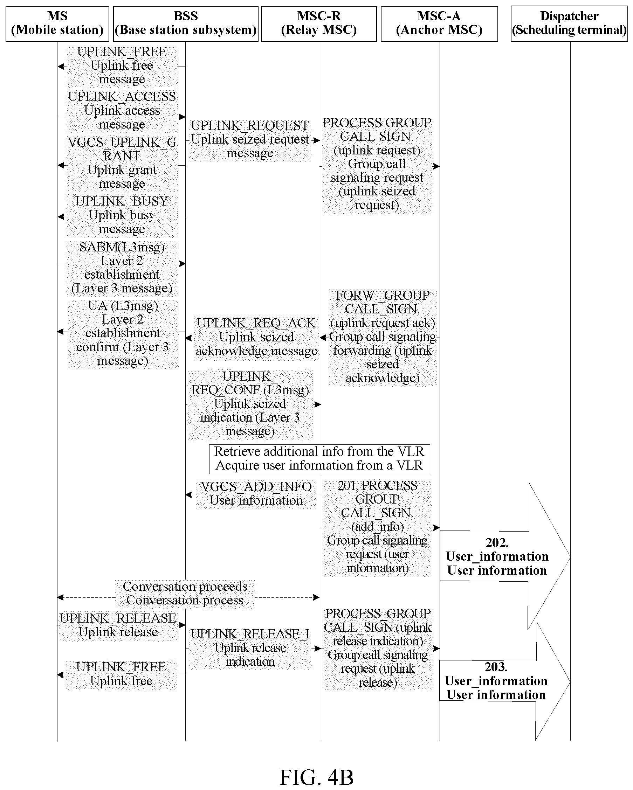

As shown in FIG. 4A and FIG. 4B, FIG. 4A and FIG. 4B show a schematic flowchart of a user information notification method according to an embodiment of the present invention. The user information notification method in this embodiment is described as follows:
201. If a service terminal seizes an uplink resource under control of an MSC-R in a group call, an MSC-A acquires, after receiving a group call signaling request message sent by the MSC-R, user information of the service terminal according to the group call signaling request message.

For example, the group call signaling request message includes the user information of the service terminal that seizes the uplink resource.

202. After obtaining the user information of the service terminal, an MSC sends a first message to a scheduling terminal, where the first message carries the user information of the service terminal that seizes the uplink resource.

For example, the first message may be a USER INFORMATION message in a UUS3 service.

203. If the service terminal releases the uplink resource, the MSC sends, after receiving an uplink resource release indication message, a second message to the scheduling terminal, where the second message carries the user information of the service terminal that releases the seized uplink resource.

The second message may be a USER INFORMATION message in a UUS3 service. It should be noted that, in this embodiment, the first message and the second message may be the same, and the second message is used to notify the scheduling terminal that currently no service terminal seizes the uplink resource, that is, the service terminal that seizes the uplink resource has released the seized uplink resource. Certainly, in another embodiment, the first message and the second message may be different.

Optionally, FIG. 4B shows that the service terminal seizes the uplink resource under control of the MSC-R in the group call, and the uplink resource release indication message may be sent by the MSC-R to the MSC-A.

In the flowchart of the group call shown in FIG. 4B, the service terminal under control of the MSC-R seizes the uplink resource, the MSC-R sends a PROCESS GROUP CALL_SIGN message to the MSC-A, and then the MSC-A notifies, by using a USER INFORMATION message in a UUS3 service, the scheduling terminal of the user information of the service terminal that seizes the uplink resource.

Optionally, when the service terminal under control of the MSC-R releases the uplink resource, after the MSC-R sends a PROCESS_GROUP CALL_SIGN.(uplink release indication) message to the MSC-A or when the MSC-A releases the uplink resource, the MSC-A notifies, by using a USER INFORMATION message in a UUS3 service, the scheduling terminal of the user information of the service terminal that seizes the uplink resource.

In this embodiment, when the service terminal proactively releases the uplink resource seized by the service terminal after the service terminal seizes the uplink resource for a preset period of time, the MSC-A may send a second message to the scheduling terminal, where the second message carries the user information of the service terminal that releases the seized uplink resource.

In other words, no matter whether the MSC-A receives the uplink resource release indication message sent by the MSC-R, when the service terminal proactively releases the uplink resource after the service terminal seizes the uplink resource for a period of time, the MSC-A may send the second message to the scheduling terminal.

By using the foregoing user information notification method, the scheduling terminal in the group call can learn about the user information of the service terminal that seizes the uplink resource.

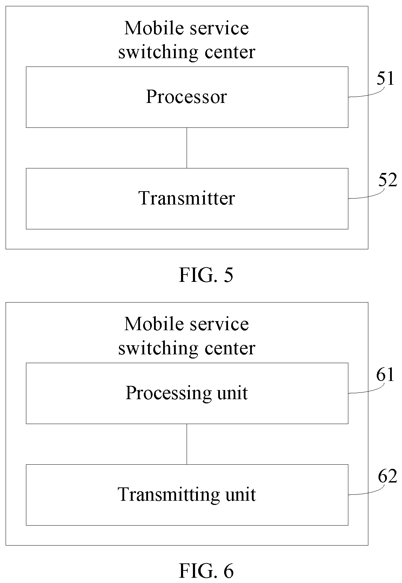

FIG. 5 shows a schematic structural diagram of a mobile service switching center according to an embodiment of the present invention. As shown in FIG. 5, the mobile service switching center in this embodiment includes a processor 51 and a transmitter 52.

The processor 51 is configured to: when a service terminal seizes an uplink resource under control of an MSC in a group call, acquire user information of the service terminal.

The transmitter 52 is configured to: after the processor 51 acquires the user information of the service terminal, send a first message to a scheduling terminal, where the first message carries the user information of the service terminal that seizes the uplink resource.

For example, the user information includes one or more of the following information:
a terminal identifier, a user priority, user location information, and a function number.

The processor 51 is specifically configured to:
when a service terminal seizes an uplink resource under control of an MSC-A in a group call, receive an uplink resource seized confirm message reported by a BSS, and acquire user information of the service terminal according to the uplink resource seized confirm message.

In this embodiment, the foregoing uplink resource seized confirm message includes the user information of the service terminal that seizes the uplink resource.

The processor 51 is specifically configured to:
when a service terminal seizes an uplink resource under control of an MSC-R in a group call, receive a group call signaling request message sent by the MSC-R, and obtain user information of the service terminal according to the group call signaling request message.

In this embodiment, the group call signaling request message includes the user information of the service terminal that seizes the uplink resource.

The processor 51 is further configured to: when the service terminal releases the uplink resource, receive an uplink resource release indication message.

Accordingly, the transmitter 52 is further configured to: after the processor 51 receives the uplink resource release indication message, send a second message to the scheduling terminal, where the second message carries the user information of the service terminal that releases the seized uplink resource.

For example, in the first optional implementation scenario, the foregoing processor 51 is specifically configured to: when a service terminal seizes an uplink resource under control of an MSC-A in a group call, receive the uplink resource release indication message sent by the BSS. Alternatively, the foregoing processor 51 is specifically configured to: when a service terminal seizes an uplink resource under control of an MSC-R in a group call, receive an uplink resource release message sent by the MSC-R.

In a second optional implementation scenario, the transmitter 52 is further configured to: when the processor 51 releases the uplink resource, send a second message to the scheduling terminal, where the second message carries the user information of the service terminal for which the seized uplink resource is released.

By using the foregoing mobile service switching center, the scheduling terminal in the group call can learn the user information of the service terminal that seizes the uplink resource.

FIG. 6 shows a schematic structural diagram of a mobile service switching center according to an embodiment of the present invention. As shown in FIG. 6, the mobile service switching center in this embodiment includes a processing unit 61 and a transmitting unit 62.

The processing unit 61 is configured to: when a service terminal seizes an uplink resource under control of an MSC in a group call, acquire user information of the service terminal.

The transmitting unit 62 is configured to: after the processing unit 61 acquires the user information of the service terminal, send a first message to a scheduling terminal, where the first message carries the user information of the service terminal that seizes the uplink resource.

For example, the user information includes one or more of the following information: a terminal identifier, a user priority, user location information, and a function number.

The processing unit 61 is specifically configured to:
when a service terminal seizes an uplink resource under control of an MSC-A in a group call, receive an uplink resource seized confirm message reported by a BSS, and acquire user information of the service terminal according to the uplink resource seized confirm message.

In this embodiment, the foregoing uplink resource seized confirm message includes the user information of the service terminal that seizes the uplink resource.

The processing unit 61 is specifically configured to:
when a service terminal seizes an uplink resource under control of an MSC-R in a group call, receive a group call signaling request message sent by the MSC-R, and obtain user information of the service terminal according to the group call signaling request message.

In this embodiment, the group call signaling request message includes the user information of the service terminal that seizes the uplink resource.

In a first optional application scenario, the processing unit 61 is further configured to: when the service terminal releases the uplink resource, receive an uplink resource release indication message. Accordingly, the transmitting unit 62 is further configured to: after the processing unit 61 receives the uplink resource release indication message, send a second message to the scheduling terminal, where the second message carries the user information of the service terminal that releases the seized uplink resource.

For example, in the first optional implementation scenario, the foregoing processing unit 61 is specifically configured to: when a service terminal seizes an uplink resource under control of an MSC-A in a group call, receive the uplink resource release indication message sent by the BSS. Alternatively, the foregoing processing unit 61 is specifically configured to: when a service terminal seizes an uplink resource under control of an MSC-R in a group call, receive an uplink resource release message sent by the MSC-R.

In a second optional implementation scenario, the transmitting unit 62 is further configured to: when the processing unit 61 releases the uplink resource, send a second message to the scheduling terminal, where the second message carries the user information of the service terminal for which the seized uplink resource is released.

By using the foregoing mobile service switching center, the scheduling terminal in the group call can learn the user information of the service terminal that seizes the uplink resource.

A person of ordinary skill in the art may understand that all or some of the steps of the method embodiments may be implemented by a program instructing related hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

A person skilled in the art may understand that the accompanying drawings are merely schematic diagrams of exemplary embodiments, and modules or procedures in the accompanying drawings are not necessarily required for implementing the present invention.

A person skilled in the art may understand that the modules in the apparatuses provided in the embodiments may be arranged in the apparatuses in a distributed manner according to the description of the embodiments, or may be arranged in one or more apparatuses that are different from those described in the embodiments. The modules in the foregoing embodiments may be combined into one module, or split into a plurality of submodules.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A user information notification method, comprising:
if a service terminal seizes an uplink resource under control of a mobile service switching center, MSC, in a group call, sending (102, 202), by the MSC after receiving user information of the service terminal, a first message to a scheduling terminal, wherein the first message carries the user information of the service terminal that seizes the uplink resource,
wherein the process of if a service terminal seizes an uplink resource under control of an MSC in a group call, receiving, by the MSC, user information of the service terminal comprises:
if a service terminal seizes an uplink resource under control of an anchor mobile service switching center, MSC-A, in a group call, obtaining, by the MSC-A after receiving an uplink resource seized confirm message reported by a base station subsystem, BSS, user information of the service terminal according to the uplink resource seized confirm message;
or,
if a service terminal seizes an uplink resource under control of a relay mobile service switching center, MSC-R, in a group call, obtaining, by an MSC-A after receiving a group call signaling request message sent by the MSC-R, user information of the service terminal according to the group call signaling request message;
wherein the uplink resource seized confirm message comprises: the user information of the service terminal that seizes the uplink resource; and
the group call signaling request message comprises: the user information of the service terminal that seizes the uplink resource.

2. The method according to any one of claim 1, wherein the method further comprises:
if the service terminal releases the uplink resource, sending, by the MSC after receiving an uplink resource release indication message, a second message to the scheduling terminal, wherein the second message carries the user information of the service terminal that releases the seized uplink resource;
or,
sending, by the MSC when releasing the uplink resource, a second message to the scheduling terminal, wherein the second message carries the user information of the service terminal for which the seized uplink resource is released.

3. The method according to claim 2, wherein: if a service terminal seizes an uplink resource under control of an MSC-A in a group call, the uplink resource release indication message is sent by a BSS to the MSC-A; or
if a service terminal seizes an uplink resource under control of an MSC-R in a group call, the uplink resource release indication message is sent by the MSC-R to an MSC-A.

4. The method according to claim 2, wherein the first information is a user information indication message, and the second message is a user information indication message.

5. The method according to any one of claims 1 to 4, wherein the user information comprises one or more of the following information:
a terminal identifier, a user priority, user location information, and a function number.

6. A mobile service switching center, comprising:
a processor (51), configured to: when a service terminal seizes an uplink resource under control of a mobile service switching center, MSC, in a group call, receiving user information of the service terminal; and
a transmitter (52), configured to: after the processor (51) receives the user information of the service terminal, send a first message to a scheduling terminal, wherein the first message carries the user information of the service terminal that seizes the uplink resource,
wherein the processor (51) is specifically configured to:
when a service terminal seizes an uplink resource under control of an anchor mobile service switching center, MSC-A, in a group call, receive an uplink resource seized confirm message reported by a base station subsystem, BSS, and obtain user information of the service terminal according to the uplink resource seized confirm message;
or,
when a service terminal seizes an uplink resource under control of a relay mobile service switching center, MSC-R, in a group call, receive a group call signaling request message sent by the MSC-R, and obtain user information of the service terminal according to the group call signaling request message;
wherein the uplink resource seized confirm message comprises: the user information of the service terminal that seizes the uplink resource; and
the group call signaling request message comprises: the user information of the service terminal that seizes the uplink resource.

7. The mobile service switching center according to claim 6, wherein the processor (51) is further configured to:
when the service terminal releases the uplink resource, receive an uplink resource release indication message; and
the transmitter (52) is further configured to:
after the processor (51) receives the uplink resource release indication message, send a second message to the scheduling terminal, wherein the second message carries the user information of the service terminal that releases the seized uplink resource;
or,
the transmitter (52) is further configured to: when the processor (51) releases the uplink resource, send a second message to the scheduling terminal, wherein the second message carries the user information of the service terminal for which the seized uplink resource is released.

8. The mobile service switching center according to claim 7, wherein the processor (51) is specifically configured to:
when a service terminal seizes an uplink resource under control of an MSC-A in a group call, receive an uplink resource release indication message sent by a BSS;
or,
when a service terminal seizes an uplink resource under control of an MSC-R in a group call, receive an uplink resource release indication message sent by the MSC-R.

9. The mobile service switching center according to any one of claims 6 to 8, wherein the user information comprises one or more of the following information:
a terminal identifier, a user priority, user location information, and a function number.

## Patentansprüche

1. Benutzerinformationen-Benachrichtigungsverfahren, das Folgendes umfasst:
falls ein Serviceterminal eine Uplink-Ressource unter Kontrolle einer Mobilfunkdienst-Vermittlungsstelle (MSC) in einem Gruppenanruf ergreift, Senden (102, 202), durch die MSC nach Empfangen von Benutzerinformationen des Serviceterminals, einer ersten Nachricht an ein Zeitplanungsterminal, wobei die erste Nachricht die Benutzerinformationen des Serviceterminals, das die Uplink-Ressource ergreift, trägt,
wobei der Prozess des Empfangens, falls ein Serviceterminal eine Uplink-Ressource unter Kontrolle einer MSC in einem Gruppenanruf ergreift, durch die MSC, von Benutzerinformationen des Serviceterminals Folgendes umfasst:
falls ein Serviceterminal eine Uplink-Ressource unter Kontrolle einer Anker-Mobilfunkdienst-Vermittlungsstelle (MSC-A) in einem Gruppenanruf ergreift, Erhalten, durch die MSC-A nach dem Empfangen einer Uplink-Ressourcenergreifungs-Bestätigungsnachricht, die von einem Basisstations-Untersystem (BSS) gemeldet wurde, von Benutzerinformationen des Serviceterminals gemäß der Uplink-Ressourcenergreifungs-Bestätigungsnachricht;
oder,
falls ein Serviceterminal eine Uplink-Ressource unter Kontrolle einer Relais-Mobilfunkdienst-Vermittlungsstelle (MSC-R) in einem Gruppenanruf ergreift, Erhalten, durch eine MSC-A nach dem Empfangen einer Gruppenanrufsignalisierungs-Anfragenachricht, die von der MSC-R gesendet wurde, von Benutzerinformationen des Serviceterminals gemäß der Gruppenanrufsignalisierungs- Anfragenachricht;
wobei die Uplink-Ressourcenergreifungs-Bestätigungsnachricht Folgendes umfasst: die Benutzerinformationen des Serviceterminals, das die Uplink-Ressource ergreift; und
die Gruppenanrufsignalisierungs-Anfragenachricht Folgendes umfasst: die Benutzerinformationen des Serviceterminals, das die Uplink-Ressource ergreift.

2. Verfahren gemäß Anspruch 1, wobei das Verfahren ferner Folgendes umfasst:
falls das Serviceterminal die Uplink-Ressource freigibt, Senden, durch die MSC nach dem Empfangen einer Uplink-Ressourcenfreigabe-Anzeigenachricht, einer zweiten Nachricht an das Zeitplanungsterminal, wobei die zweite Nachricht die Benutzerinformationen des Serviceterminals trägt, das die ergriffene Uplink-Ressource freigibt;
oder,
Senden, durch die MSC bei Freigabe der Uplink-Ressource, einer zweiten Nachricht an das Zeitplanungsterminal, wobei die zweite Nachricht die Benutzerinformationen des Serviceterminals trägt, für das die ergriffene Uplink-Ressource freigegeben wird.

3. Verfahren gemäß Anspruch 2, wobei: falls ein Serviceterminal eine Uplink-Ressource unter Kontrolle einer MSC-A in einem Gruppenanruf ergreift, die Uplink-Ressourcenfreigabe-Anzeigenachricht durch ein BSS an die MSC-A gesendet wird;
oder
falls ein Serviceterminal eine Uplink-Ressource unter Kontrolle einer MSC-R in einem Gruppenanruf ergreift, die Uplink-Ressourcenfreigabe-Anzeigenachricht durch die MSC-R an eine MSC-A gesendet wird.

4. Verfahren gemäß Anspruch 2, wobei die ersten Informationen eine Benutzerinformationen-Anzeigenachricht sind, und die zweite Nachricht eine Benutzerinformationen-Anzeigenachricht ist.

5. Verfahren gemäß einem der Ansprüche 1 bis 4, wobei die Benutzerinformationen eine oder mehrere der folgenden Informationen umfassen:
einen Terminalidentifikator, eine Benutzerpriorität, Benutzerpositionsinformationen und eine Funktionsnummer.

6. Mobilfunkdienst-Vermittlungsstelle, die Folgendes umfasst:
einen Prozessor (51), der für Folgendes ausgelegt ist: wenn ein Serviceterminal eine Uplink-Ressource unter Kontrolle einer Mobilfunkdienst-Vermittlungsstelle (MSC) in einem Gruppenanruf ergreift, Empfangen von Benutzerinformationen des Serviceterminals; und
einen Sender (52), der für Folgendes ausgelegt ist: nachdem der Prozessor (51) die Benutzerinformationen des Serviceterminals empfangen hat, Senden einer ersten Nachricht an ein Zeitplanungsterminal, wobei die erste Nachricht die Benutzerinformationen des Serviceterminals trägt, das die Uplink-Ressource ergreift, wobei der Prozessor (51) insbesondere für Folgendes ausgelegt ist:
wenn ein Serviceterminal eine Uplink-Ressource unter Kontrolle einer Anker-Mobilfunkdienst-Vermittlungsstelle (MSC-A) in einem Gruppenanruf ergreift, Empfangen einer Uplink-Ressourcenergreifungs-Bestätigungsnachricht, die von einem Basisstations-Untersystem (BSS) gemeldet wurde, und Erhalten von Benutzerinformationen des Serviceterminals gemäß der Uplink-Ressourcenergreifungs- Bestätigungsnachricht;
oder,
wenn ein Serviceterminal eine Uplink-Ressource unter Kontrolle einer Relais-Mobilfunkdienst-Vermittlungsstelle (MSC-R) in einem Gruppenanruf ergreift, Empfangen einer Gruppenanrufsignalisierungs-Anfragenachricht, die von der MSC-R gesendet wurde, und Erhalten von Benutzerinformationen des Serviceterminals gemäß der Gruppenanrufsignalisierungs-Anfragenachricht;
wobei die Uplink-Ressourcenergreifungs-Bestätigungsnachricht Folgendes umfasst: die Benutzerinformationen des Serviceterminals, das die Uplink-Ressource ergreift; und
die Gruppenanrufsignalisierungs-Anfragenachricht Folgendes umfasst: die Benutzerinformationen des Serviceterminals, das die Uplink-Ressource ergreift.

7. Mobilfunkdienst-Vermittlungsstelle gemäß Anspruch 6, wobei der Prozessor (51) ferner für Folgendes ausgelegt ist:
wenn das Serviceterminal die Uplink-Ressource freigibt, Empfangen einer Uplink-Ressourcenfreigabe-Anzeigenachricht; und
der Sender (52) ferner für Folgendes ausgelegt ist:
nachdem der Prozessor (51) die Uplink-Ressourcenfreigabe-Anzeigenachricht empfangen hat, Senden einer zweiten Nachricht an das Zeitplanungsterminal, wobei die zweite Nachricht die Benutzerinformationen des Serviceterminals trägt, das die ergriffene Uplink-Ressource freigibt;
oder,
der Sender (52) ferner für Folgendes ausgelegt ist: wenn der Prozessor (51) die Uplink-Ressource freigibt, Senden einer zweiten Nachricht an das Zeitplanungsterminal, wobei die zweite Nachricht die Benutzerinformationen des Serviceterminals trägt, für das die ergriffene Uplink-Ressource freigegeben wird.

8. Mobilfunkdienst-Vermittlungsstelle gemäß Anspruch 7, wobei der Prozessor (51) insbesondere für Folgendes ausgelegt ist:
wenn ein Serviceterminal eine Uplink-Ressource unter Kontrolle einer MSC-A in einem Gruppenanruf ergreift, Empfangen einer von einer BSS gesendeten Uplink-Ressourcenfreigabe- Anzeigenachricht;
oder,
wenn ein Serviceterminal eine Uplink-Ressource unter Kontrolle einer MSC-R in einem Gruppenanruf ergreift, Empfangen einer von der MSC-R gesendeten Uplink-Ressourcenfreigabe- Anzeigenachricht.

9. Mobilfunkdienst-Vermittlungsstelle gemäß einem der Ansprüche 6 bis 8, wobei die Benutzerinformationen eine oder mehrere der folgenden Informationen umfassen:
einen Terminalidentifikator, eine Benutzerpriorität, Benutzerpositionsinformationen und eine Funktionsnummer.

## Revendications

1. Procédé de notification d'informations d'utilisateur, comprenant :
si un terminal de service saisit une ressource de liaison montante sous le contrôle d'un centre de commutation de service mobile, MSC, dans un appel de groupe, envoyer (102, 202), par le MSC après la réception des informations d'utilisateur du terminal de service, un premier message à un terminal de planification, le premier message acheminant les informations d'utilisateur du terminal de service qui saisit la ressource de liaison montante,
dans lequel le procédé, si un terminal de service saisit une ressource de liaison montante sous le contrôle d'un MSC dans un appel de groupe, de réception, par le MSC, des informations d'utilisateur du terminal de service, comprend :
si un terminal de service saisit une ressource de liaison montante sous le contrôle d'un centre de commutation de service mobile d'ancrage, MSC-A, dans un appel de groupe, obtenir, par le MSC-A après la réception d'un message de confirmation saisi de ressource de liaison montante rapporté par les informations d'utilisateur de sous-système de station de base, BSS, du terminal de service en fonction du message de confirmation saisi de ressource de liaison montante ;
ou,
si un terminal de service saisit une ressource de liaison montante sous le contrôle d'un centre de commutation de service mobile de relais, MSC-R, dans un appel de groupe, obtenir, par un MSC-A après la réception d'un message de demande de signalisation d'appel de groupe envoyé par le MSC-R, des informations d'utilisateur du terminal de service en fonction du message de demande de signalisation d'appel de groupe ;
dans lequel le message de confirmation saisi de ressources de liaison montante comprend : les informations d'utilisateur du terminal de service qui saisissent la ressource de liaison montante ; et
le message de demande de signalisation d'appel de groupe comprend : les informations d'utilisateur du terminal de service qui saisissent la ressource de liaison montante.

2. Procédé selon la revendication 1, dans lequel le procédé comprend en outre :
si le terminal de service libère la ressource de liaison montante, envoyer, par le MSC après réception d'un message d'indication de libération de ressource de liaison montante, un second message au terminal de planification, le second message acheminant les informations d'utilisateur du terminal de service qui libère la ressource de liaison montante saisie ;
ou,
envoyer, par le MSC lors de la libération de la ressource de liaison montante, un second message au terminal de planification, le second message acheminant les informations d'utilisateur du terminal de service pour lequel la ressource de liaison montante saisie est libérée.

3. Procédé selon la revendication 2, dans lequel : si un terminal de service saisit une ressource de liaison montante sous le contrôle d'un MSC-A dans un appel de groupe, le message d'indication de libération de ressource de liaison montante est envoyé par un BSS au MSC-A ; ou
si un terminal de service saisit une ressource de liaison montante sous le contrôle d'un MSC-R dans un appel de groupe, le message d'indication de libération de ressource de liaison montante est envoyé par le MSC-R à un MSC-A.

4. Procédé selon la revendication 2, dans lequel les premières informations sont un message d'indication d'informations d'utilisateur, et le second message est un message d'indication d'informations d'utilisateur.

5. Procédé selon l'une quelconque des revendications 1 à 4, dans lequel les informations d'utilisateur comprennent une ou plusieurs des informations suivantes :
un identifiant de terminal, une priorité d'utilisateur, des informations de localisation d'utilisateur et un nombre de fonctions.

6. Centre de commutation de service mobile, comprenant :
un processeur (51), conçu pour : lorsqu'un terminal de service saisit une ressource de liaison montante sous le contrôle d'un centre de commutation de service mobile, MSC, dans un appel de groupe, recevoir des informations d'utilisateur du terminal de service ; et
un émetteur (52), conçu pour: après la réception par le processeur (51) des informations d'utilisateur du terminal de service, envoyer un premier message à un terminal de planification, le premier message acheminant les informations d'utilisateur du terminal de service qui saisit la ressource de liaison montante,
dans lequel le processeur (51) est conçu spécifiquement pour :
lorsqu'un terminal de service saisit une ressource de liaison montante sous le contrôle d'un centre de commutation de service mobile d'ancrage, MSC-A, dans un appel de groupe, recevoir un message de confirmation saisi d'une ressource de liaison montante rapporté par un sous-système de station de base, BSS, et obtenir des informations d'utilisateur du terminal de service en fonction du message de confirmation saisi de ressource de liaison montante ;
ou,
lorsqu'un terminal de service saisit une ressource de liaison montante sous le contrôle d'un centre de commutation de service mobile de relais, MSC-R, dans un appel de groupe, recevoir un message de demande de signalisation d'appel de groupe envoyé par le MSC-R, et obtenir des informations d'utilisateur du terminal de service en fonction du message de demande de signalisation d'appel de groupe ;
dans lequel le message de confirmation saisi de ressource de liaison montante comprend : les informations d'utilisateur du terminal de service qui saisit la ressource de liaison montante ; et
le message de demande de signalisation d'appel de groupe comprend : les informations d'utilisateur du terminal de service qui saisissent la ressource de liaison montante.

7. Centre de commutation de service mobile selon la revendication 6, dans lequel le processeur (51) est conçu en outre pour :
lorsque le terminal de service libère la ressource de liaison montante, recevoir un message d'indication de libération de ressource de liaison montante ; et
l'émetteur (52) est conçu en outre pour :
après la réception, par le processeur (51), du message d'indication de libération de ressources de liaison montante, envoyer un second message au terminal de planification, le second message acheminant les informations d'utilisateur du terminal de service qui libère la ressource de liaison montante saisie ;
ou,
l'émetteur (52) est conçu en outre pour : lorsque le processeur (51) libère la ressource de liaison montante, envoyer un second message au terminal de planification, le second message acheminant des informations d'utilisateur du terminal de service pour lequel la ressource de liaison montante saisie est libérée.

8. Centre de commutation de service mobile selon la revendication 7, dans lequel le processeur (51) est conçu spécifiquement pour :
lorsqu'un terminal de service saisit une ressource de liaison montante sous le contrôle d'un MSC-A dans un appel de groupe, recevoir un message d'indication de libération de ressource de liaison montante envoyé par un BSS ;
ou,
lorsqu'un terminal de service saisit une ressource de liaison montante sous le contrôle d'un MSC-R dans un appel de groupe, recevoir un message d'indication de libération de ressource de liaison montante envoyé par le MSC-R.

9. Centre de commutation de service mobile selon l'une quelconque des revendications 6 à 8, dans lequel les informations d'utilisateur comprennent une ou plusieurs des informations suivantes :
un identifiant de terminal, une priorité d'utilisateur, des informations de localisation d'utilisateur et un nombre de fonctions.
